# EUROPEAN PATENT SPECIFICATION

(11) **EP 3 306 788 B1**
(45) Date of publication and mention of the grant of the patent: **21.07.2021**
(21) Application number: 15894172.4
(22) Date of filing: 02.06.2015
(51) Int. Cl.: H02K 19/36, H02K 5/22, H02K 11/04, H02K 15/12, H01R 4/70

(54) **ROTATING ELECTRICAL MACHINE AND METHOD FOR MANUFACTURING REGULATOR**
ELEKTRISCHE DREHMASCHINE UND VERFAHREN ZUR HERSTELLUNG EINES REGLERS
MACHINE ÉLECTRIQUE TOURNANTE ET PROCÉDÉ DE FABRICATION DE RÉGULATEUR

(43) Date of publication of application: 11.04.2018
(73) Proprietor: Mitsubishi Electric Corporation, Chiyoda-ku Tokyo 100-8310 (JP)
(72) Inventor: AKAMATSU, Katsuya, Tokyo 100-8310 (JP); SASAKI, Katsuhiro, Tokyo 100-8310 (JP); TANAKA, Kazunori, Tokyo 100-8310 (JP)
(74) Representative: Hoffmann Eitle
(86) International application number: PCT/JP2015/065906
(87) International publication number: WO 2016/194137

(56) References cited:
- EP-A2- 1 681 748
- WO-A1-2013/157066
- WO-A1-2014/068914
- JP-A- H0 236 710
- JP-A- H05 103 440
- JP-A- 2008 098 007
- JP-A- 2011 130 639
- JP-B2- 5 242 112
- US-A- 4 963 699
- US-A- 5 057 650
- US-A- 5 686 780
- US-A1- 2011 148 366
- US-A1- 2011 316 372
- US-A1- 2012 200 204

## Description

### Technical Field

This invention relates to a rotary electric machine having a regulator for regulating an AC voltage generated in a stator coil, and a method of manufacturing the regulator.

### Background Art

In a conventional regulator for a vehicle AC power generator, a plurality of connection terminals of a regulator main body are connected individually to a plurality of main body connection portions provided on an insert terminal of a regulator holder, and an interior space of the regulator holder is filled with an insulating resin material such that respective connecting parts between the connection terminals and the main body connection portions are embedded in the insulating resin material and thus protected (see PTL 1, for example).

### Citation List

### Patent Literature

[PTL 1] Japanese Patent Application Publication No. 2011-130639

US 5,686,780 A discloses a voltage regulating circuit in a single mold package, which is attached to the case directly or by a heat conductive material such that it is sandwiched between the case of a voltage regulator and a heat sink. Conductors which serve as internal wirings and form terminals are insert-molded with the case of the voltage regulator and the brush holder to be superimposed upon the case of the voltage regulator. Out of the terminals formed in the conductors, specific terminals on respective sides are aligned, and the brush holder is installed in the case of the voltage regulator in such a manner that they are superimposed upon each other so that electrical connection of these elements is effected.

US 4,963,699 A discloses an apparatus for joining a plurality of lead wires with a corresponding plurality of flat type electric wires. The apparatus comprises a plurality of connector terminals, each having a first caulking portion for securing the round wire to a first end of the connector terminal, and a clasping portion for securing the flat wire to a second end of the connector terminal, the clasping portion comprising a first and second spring portion, a projecting portion projecting from the clasping portion toward the flat wire, and second caulking portion for compressing the flat electric wire between the first and second spring portion by securing the first spring portion to the second spring portion. The projecting portion may receive solder so that the flat type electric wire can be spot welded to the connector terminal. To prevent short circuits between the connector terminals, a comb-like spacer may separate the connector terminals, or the exterior of each connector terminal may be insulated. The connector terminals may be encased in resin or the like to provide further protection from exposure. The resulting connection is extremely compact, reliable, and provides a stable electrical connection over time.

US 5,057,650 A discloses a similar voltage regulator.

### Summary of Invention

### Technical Problem

However, the respective connection terminals are connected to the respective main body connection portions within the narrow space inside the regulator holder, and therefore, when the connection terminals are connected to the main body connection portions by welding, for example, an unforeseen electrical short circuit may occur due to scattered molten metal, or in other words spatter, or the like generated during the welding. Further, when the insert terminal is manufactured by press-punching a metal plate and pressing residue or the like sticks to the insert terminal, an unforeseen electrical short circuit may occur in another location of the regulator as well as the welding locations between the connection terminals and the main body connection portions.

Furthermore, even when removal measures such as air blowing are adopted to remove conductive foreign matter such as spatter and pressing residue from the regulator holder, the conductive foreign matter may stick to the insert terminal and so on again, and it is therefore difficult to remove the conductive foreign matter completely from the interior space of the regulator holder.

Moreover, even if an unforeseen electrical short circuit does not occur before the regulator holder is filled with the insulating resin material, when the regulator holder is filled with the insulating resin material, the conductive foreign matter may move together with the insulating resin material due to a filling pressure of the insulating resin material, leading to an increase in the likelihood of an unforeseen electrical short circuit. Furthermore, in this case, the occurrence of an electrical short circuit is easily overlooked.

Further, in a vehicle AC power generator, a general-purpose package is used for the regulator, with the result that distances between adjacent connection terminals are short and fixed. Therefore, even when the conductive foreign matter is removed from the regulator holder, an unforeseen electrical short circuit is likely to occur due to normal swelling or the like of the welded parts between the connection terminals and the main body connection portions.

This invention has been designed to solve the problems described above, and an object thereof is to obtain a rotary electric machine and a regulator manufacturing method with which a regulator can be improved in reliability.

### Solution to Problem

The present invention provides a rotary electric machine, in accordance with claim 1.

The present invention also provides a regulator manufacturing method for manufacturing a regulator, in accordance with claim 6.

### Advantageous Effects of Invention

With the rotary electric machine and the regulator manufacturing method according to this invention, the insert portion of the partition member is inserted into the gap between the respective connection portions by which the main body terminals are connected to the connection terminals, and therefore, even when conductive foreign matter remains in the gap between the respective connection portions by which the main body terminals are connected to the connection terminals, the conductive foreign matter can be pushed out by the insert portion. Hence, electrical short circuits can be prevented more reliably from occurring between the respective connection portions by which the main body terminals are connected to the connection terminals, and as a result, the reliability of the regulator can be improved.

### Brief Description of Drawings

Fig. 1 is a longitudinal sectional view showing a vehicle AC power generator according to a first embodiment of this invention.
Fig. 2 is an electric circuit diagram of the vehicle AC power generator shown in Fig. 1.
Fig. 3 is a front view showing a regulator of Fig. 1.
Fig. 4 is a sectional view taken along an IV-IV line in Fig. 3.
Fig. 5 is a front view showing a regulator holder of Fig. 3.
Fig. 6 is a sectional view taken along a VI-VI line in Fig. 5.
Fig. 7 is a front view showing a regulator main body of Fig. 4.
Fig. 8 is a side view showing the regulator main body of Fig. 7.
Fig. 9 is a front view showing a heat sink of Fig. 4.
Fig. 10 is a side view showing the heat sink of Fig. 9.
Fig. 11 is a perspective view showing a partition member of Fig. 4.
Fig. 12 is a sectional view showing main parts in a condition where the regulator main body of Fig. 8 is placed on a carrying surface.
Fig. 13 is a plan view comparing connection terminals of Fig. 12 before and after being welded.
Fig. 14 is a side view comparing the connection terminals of Fig. 13 before and after being welded.
Fig. 15 is a sectional view showing main parts in a condition where the partition member is attached to the connection terminals and main body terminals of Fig. 12.
Fig. 16 is a sectional view showing main parts in a condition where the heat sink is attached to a holder member of Fig. 15.
Fig. 17 is a sectional view showing main parts in a condition where a regulator holder of Fig. 16 is turned upside down.
Fig. 18 is a front view showing a regulator according to a second embodiment of this invention.
Fig. 19 is a main-part front view showing a part of the regulator of Fig. 18 that includes a partition member.
Fig. 20 is a front view showing another example of the regulator according to the second embodiment of this invention.

### Description of Embodiments

### First Embodiment

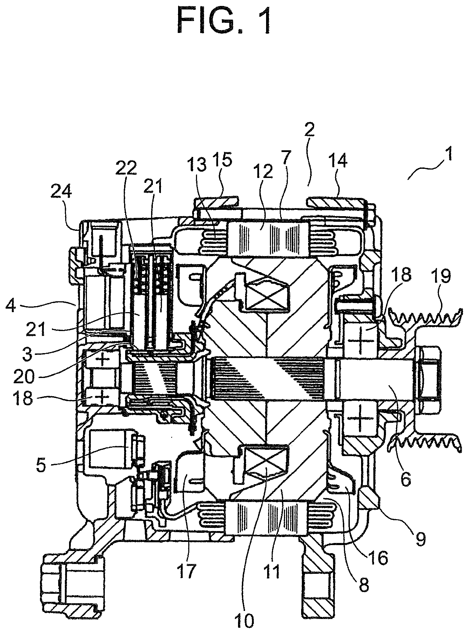

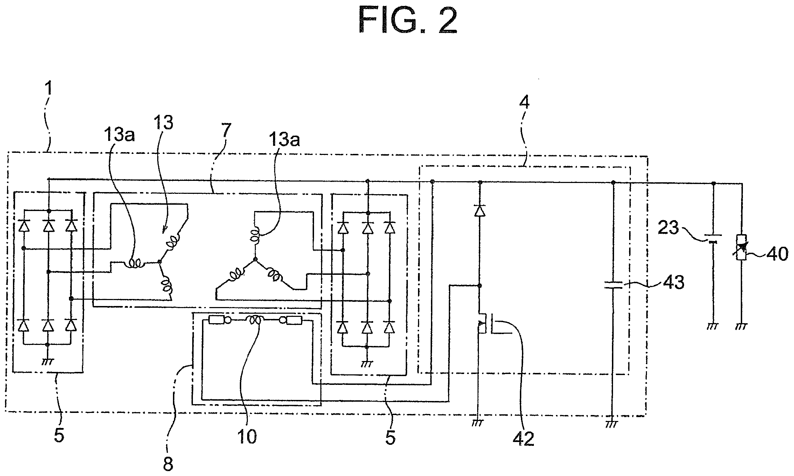

Fig. 1 is a longitudinal sectional view showing a vehicle AC power generator according to a first embodiment of this invention, and Fig. 2 is an electric circuit diagram of the vehicle AC power generator shown in Fig. 1. In the figures, a vehicle AC power generator 1 includes a power generator main body 2 serving as a rotary electric machine main body, and a brush device 3, a regulator 4, and a rectifier 5 respectively attached to the power generator main body 2 . The vehicle AC power generator 1 is a rotary electric machine installed in a vehicle such as an automobile, for example.

The power generator main body 2 includes a shaft 6 serving as a rotary shaft, a cylindrical stator 7 disposed coaxially with the shaft 6, a rotor 8 disposed on an inner side of the stator 7 and fixed to the shaft 6, and a frame 9 that supports the shaft 6, the stator 7, and the rotor 8.

The rotor 8 rotates integrally with the shaft 6 relative to the stator 7 about an axis of the shaft 6. Further, the rotor 8 includes a field coil 10 that generates magnetic flux when an excitation current is fed thereto, and a pole core 11 on which the field coil 10 is provided and on which magnetic poles are formed by the magnetic flux of the field coil 10.

The stator 7 is fixed to the frame 9. Further, the stator 7 includes a cylindrical stator core 12 that surrounds an outer periphery of the rotor 8, and a stator coil 13 provided on the stator core 12. When the magnetic flux of the field coil 10 varies as the rotor 8 rotates, AC electromotive force is generated in the stator coil 13. In this example, as shown in Fig. 2, the stator coil 13 is constituted by two three-phase AC windings, each of which is formed by connecting a plurality of winding portions 13a in a three-phase Y connection.

As shown in Fig. 1, the frame 9 includes a front bracket 14 and a rear bracket 15 formed from aluminum. The front bracket 14 and the rear bracket 15 are fixed to each other by a plurality of bolts so as to sandwich the stator core 12 in an axial direction of the shaft 6. A front side fan 16 is fixed to a front bracket 14 side end face of the rotor 8, and a rear side fan 17 is fixed to a rear bracket 15 side end face of the rotor 8. When the rotor 8 and the shaft 6 rotate integrally, the front side fan 16 and the rear side fan 17 rotate, thereby generating cooling air for cooling the vehicle AC power generator 1.

The shaft 6 is supported by the front bracket 14 and the rear bracket 15 to be free to rotate via respective bearings 18. Further, the shaft 6 penetrates the front bracket 14. A pulley 19 is fixed to a part of the shaft 6 that projects from the front bracket 14. A transmission belt, not shown in the figure, coupled to an output shaft of an engine is wound around the pulley 19. Rotary torque from the engine is transmitted to the shaft 6 from the output shaft of the engine via the transmission belt. When the shaft 6 receives the rotary torque from the engine, the shaft 6 rotates about the axis thereof.

The brush device 3, the regulator 4, and the rectifier 5 are attached to the rear bracket 15. The brush device 3 includes a pair of slip rings 20 fixed to a part of the shaft 6 that projects from the rotor 8 toward the rear bracket 15 side, a pair of brushes 21 individually contacting the respective slip rings 20, and a pair of springs 22 that generate elastic restoring force for pushing the brushes 21 individually against the slip rings 20. The slip rings 20 slide against the brushes 21 as the shaft 6 rotates. A field current is supplied from a battery 23, shown in Fig. 2, to the field coil 10 of the rotor 8 through the brush device 3.

The regulator 4 is provided with a connector 24. The regulator 4 communicates with an external in-vehicle device or the like, not shown in the figures, via the connector 24. Further, the regulator 4 is electrically connected to the field coil 10 via the brush device 3. The regulator 4 regulates the magnitude of an AC voltage generated in the stator coil 13 by regulating the field current supplied to the field coil 10 from the battery 23 on the basis of information from the external in-vehicle device or the like.

The rectifier 5 is electrically connected to the stator coil 13. In this example, as shown in Fig. 2, two rectifiers 5 are electrically connected individually to the two three-phase AC windings constituting the stator coil 13 . The rectifiers 5 rectify an AC current generated in the stator coil 13 to a DC current. The DC current rectified by the rectifiers 5 is stored in the battery 23 or supplied to another electric load 40.

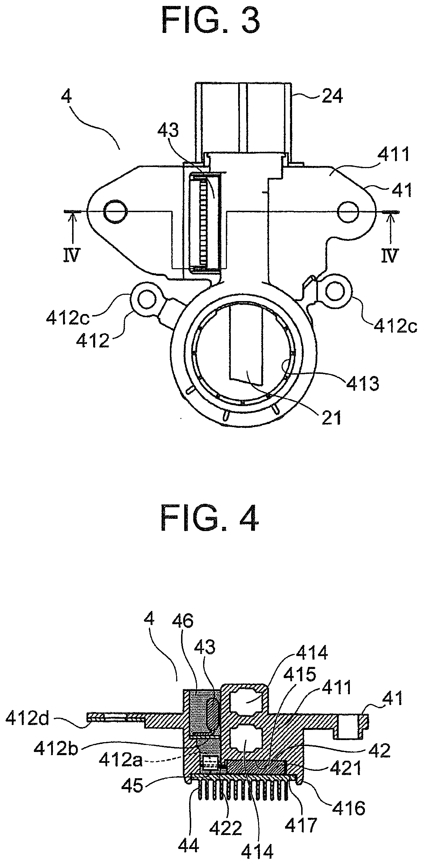

Fig. 3 is a front view showing the regulator 4 of Fig. 1, and Fig. 4 is a sectional view taken along an IV-IV line in Fig. 3. Note that Fig. 3 shows the regulator 4 from the rotor 8 side. The regulator 4 includes a regulator holder 41, and a regulator main body 42, a capacitor 43, a heat sink 44, and a partition member 45 respectively provided in the regulator holder 41.

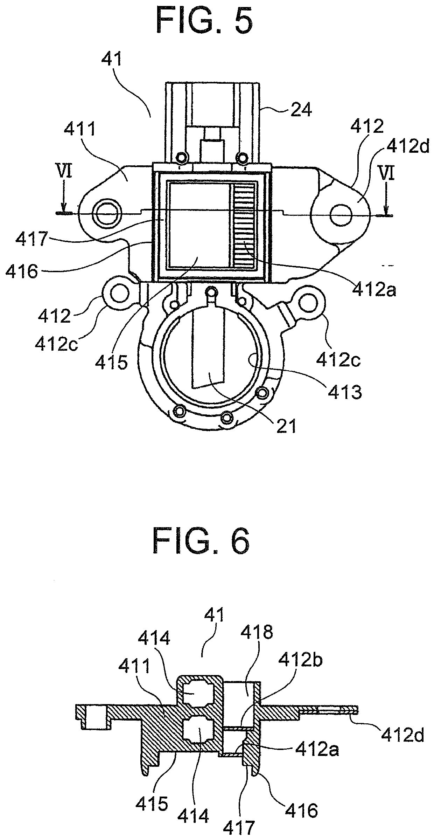

Here, Fig. 5 is a front view showing the regulator holder 41 of Fig. 3, and Fig. 6 is a sectional view taken along a VI-VI line in Fig. 5. Note that Fig. 5 shows the regulator holder 41 from an opposite side to the rotor 8 side. The regulator holder 41 includes a molded member 411 having an electrical insulating property, and a terminal group 412 provided on the molded member 411. Resin or the like, for example, is used as a material for forming the molded member 411. The molded member 411 is molded integrally with the terminal group 412 by insert molding.

The molded member 411 is provided with a shaft through hole 413 through which the shaft 6 is passed, and two brush holes 414 through which the respective brushes 21 are passed. Note that Figs. 3 and 5 show a condition in which the shaft 6 has been removed from the shaft through hole 413 and the brushes 21 are respectively caused to project into the shaft through hole 413 by the elastic restoring force of the springs 22 shown in Fig. 1.

Further, a carrying surface 415 on which the regulator main body 42 is carried and a surrounding portion 416 that serves as a wall surrounding the carrying surface 415 are formed on the molded member 411. A step portion 417 for receiving the heat sink 44 is formed in the surrounding portion 416 so as to extend around the periphery of the surrounding portion 416. The regulator holder 41 is disposed such that the carrying surface 415 faces the opposite side to the rotor 8 side.

As shown in Fig. 6, a space portion 418 is provided in the molded member 411. The space portion 418 is open in parts other than the carrying surface 415 provided inside the surrounding portion 416, and is also open in a part of the molded member 411 on an opposite side to the surrounding portion 416.

The terminal group 412 includes a plurality of main body terminals 412a, a plurality of capacitor terminals 412b, a plurality of rectifier terminals 412c, a bracket terminal 412d, and a connector terminal, not shown in the figures, that is exposed to the interior of the connector 24. The main body terminals 412a, the capacitor terminals 412b, the rectifier terminals 412c, the bracket terminal 412d, and the connector terminal are all formed from conductive metal terminals. In this example, the main body terminals 412a, the capacitor terminals 412b, the rectifier terminals 412c, the bracket terminal 412d, and the connector terminal are formed by punching steel plate.

The main body terminals 412a are respectively embedded in the molded member 411 so as to be partially exposed to the space portion 418. As shown in Fig. 5, when the regulator holder 41 is seen from the surrounding portion 416 side, parts of the respective main body terminals 412a that are exposed to the space portion 418 project from an edge portion of the carrying surface 415 in parallel with each other, with gaps therebetween.

As shown in Fig. 6, the capacitor terminals 412b are respectively embedded in the molded member 411 so as to be partially exposed to the space portion 418 in a location removed from the main body terminals 412a. As shown in Fig. 5, the rectifier terminals 412c are respectively embedded in the molded member 411 so as to project partially from an outer face of the molded member 411. The bracket terminal 412d is embedded in the molded member 411 so as to be partially exposed from the outer face of the molded member 411.

The regulator holder 41 is fixed to the rear bracket 15 by a bolt, not shown in the figures, such that the exposed part of the bracket terminal 412d contacts the rear bracket 15. As a result, the bracket terminal 412d has an identical potential to the rear bracket 15. The parts of the respective rectifier terminals 412c that project from the molded member 411 are electrically connected to the rectifiers 5. By electrically connecting the regulator main body 42 and the capacitor 43 to the terminal group 412, the regulator 4 forms an electric circuit including the regulator main body 42 and the capacitor 43, as shown in Fig. 2.

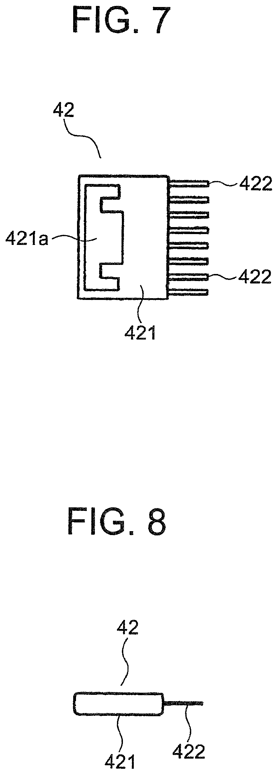

Fig. 7 is a front view showing the regulator main body 42 of Fig. 4, and Fig. 8 is a side view showing the regulator main body 42 of Fig. 7. The regulator main body 42 includes a main body portion 421, and a plurality of connection terminals 422 projecting from the main body portion 421.

The main body portion 421 of the regulator main body 42 performs calculations to regulate the AC voltage generated in the stator coil 13. Further, the main body portion 421 includes an IC chip, a main body capacitor, and so on as a plurality of circuit components. Furthermore, the main body portion 421 is formed by molding the plurality of circuit components integrally using a molding material (resin or the like, for example). The regulator main body 42 thus serves as an IC type regulator main body. In this example, the main body portion 421 has a rectangular parallelepiped shape. Further, in this example, the respective connection terminals 422 project in an identical direction from a side face of the main body portion 421 in parallel with each other, with gaps therebetween.

As shown in Fig. 4, the main body portion 421 of the regulator main body 42 is carried on the carrying surface 415. The connection terminals 422 are disposed respectively in alignment with the main body terminals 412a. Moreover, the connection terminals 422 are connected individually to the main body terminals 412a by welding.

The capacitor 43 suppresses a commutation surge voltage generated when rectification is implemented in the regulator main body 42. By suppressing the commutation surge voltage, the generation of high-frequency noise that adversely affects radio waves from the regulator 4 is suppressed. Further, as shown in Fig. 4, the capacitor 43 is disposed in the space portion 418 inside the molded member 411. Furthermore, a pair of terminals of the capacitor 43 are connected by welding to the parts of the respective capacitor terminals 412b that are exposed to the space portion 418.

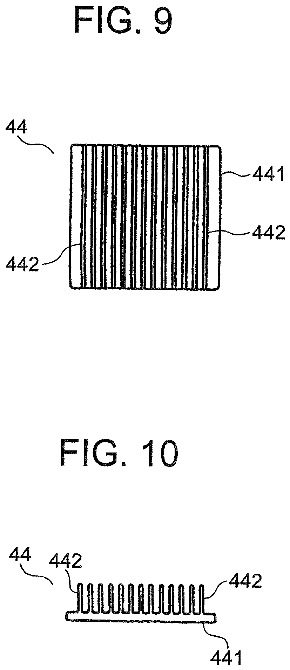

Fig. 9 is a front view showing the heat sink 44 of Fig. 4, and Fig. 10 is a side view showing the heat sink 44 of Fig. 9. The heat sink 44 is formed from a material having thermal conductivity, for example a metal such as aluminum. Further, the heat sink 44 includes a plate-shaped heat sink base portion 441, and a plurality of plate-shaped fins 442 projecting from a planar portion of the heat sink base portion 441.

As shown in Fig. 4, the heat sink 44 is attached to the molded member 411 by fitting an outer peripheral portion of the heat sink base portion 441 into the surrounding portion 416 such that the fins 442 face outward. As a result, the open part of the space portion 418 on the surrounding portion 416 side is closed by the heat sink 44. Further, in the regulator 4, the heat sink 44 is positioned relative to the molded member 411 by receiving the outer peripheral portion of the heat sink base portion 441 on the step portion 417. The main body portion 421 of the regulator main body 42 is sandwiched between the carrying surface 415 and the heat sink base portion 441.

As shown in Fig. 7, a metal heat radiation component 421a having high thermal conductivity is provided in the main body portion 421 to discharge heat from the IC chip and so on included in the main body portion 421 to the outside. The heat radiation component 421a is formed integrally with the plurality of circuit components provided in the main body portion 421 from the molding material. Further, the heat radiation component 421a is exposed from a front surface of the main body portion 421. A paste-form thermally conductive material is interposed between the heat radiation component 421a and the heat sink base portion 441. As a result, a part of the heat generated by the main body portion 421 is discharged to the heat sink 44 via the heat radiation component 421a and the thermally conductive material.

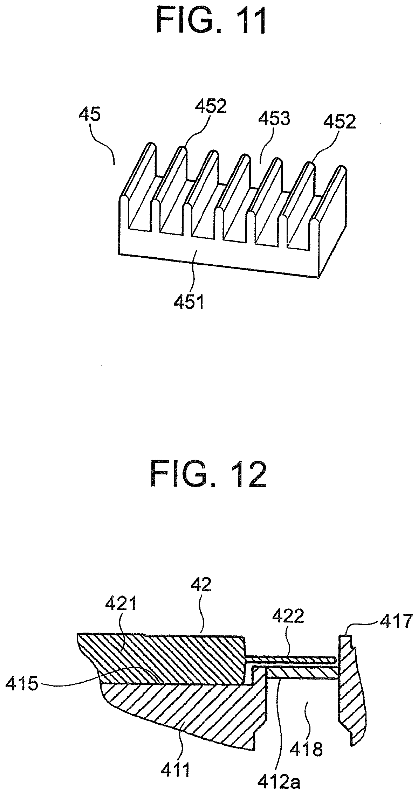

Fig. 11 is a perspective view showing the partition member 45 of Fig. 4. The partition member 45 is formed from a material having an electrical insulating property. Plastic or the like, for example, is used as the material of the partition member 45. The partition member 45 includes a plate-shaped base portion 451, and a plurality of plate-shaped insert portions 452 that project from the base portion 451.

The respective insert portions 452 project from the base portion 451 in parallel with each other in an identical direction. As a result, a plurality of grooves 453 that are open to an opposite side to the base portion 451 are formed between the respective insert portions 452.

The partition member 45 is disposed in the space portion 418 such that the insert portions 452 are inserted individually between connection portions by which the connection terminals 422 are connected respectively to the main body terminals 412a. As a result, electrical insulation is secured between the connection portions by which the connection terminals 422 are connected to the main body terminals 412a. In this example, the seven insert portions 452 shown in Fig. 11 are inserted individually into gaps between the eight connection terminals 422 shown in Fig. 7. Hence, in this example, the eight connection portions by which the connection terminals 422 are connected to the main body terminals 412a are disposed individually in the six grooves 453 of the partition member 45, excluding the two connection portions on the respective ends.

As shown in Fig. 4, a filling material 46 having an electrical insulation property is filled into the space portion 418 in the molded member 411. Silicone rubber, epoxy resin, or the like, for example, is used as the material forming the filling material 46. The filling material 46 is provided separately to the partition member 45. In this example, the material forming the filling material 46 is different to the material forming the partition member 45. Moreover, in this example, the partition member 45 is harder than the filling material 46.

The connection portions between the connection terminals 422 and the main body terminals 412a are embedded in the filling material 46 together with the capacitor terminals 412b, the capacitor 43, and the partition member 45. As a result, electrical insulation is secured between the outside and the respective sites of the connection terminals 422, the main body terminals 412a, the capacitor terminals 412b, and the capacitor 43 that are located within the space portion 418. The filling material 46 also extends to the main body portion 421 of the regulator main body 42 and the heat sink base portion 441. As a result, the regulator main body 42, the capacitor 43, and the partition member 45 are fixed to the molded member 411. In addition, the attachment of the heat sink 44 to the molded member 411 is reinforced.

Next, an operation of the vehicle AC power generator 1 will be described. The field current from the battery 23 is supplied to the field coil 10 through the brush device 3. Accordingly, magnetic flux is generated from the field coil 10, and as a result, N poles and S poles are formed alternately in a peripheral direction on an outer peripheral portion of the pole core 11 of the rotor 8. Meanwhile, when the rotary torque of the engine is transmitted to the shaft 6 via the transmission belt and the pulley 19, the rotor 8 rotates integrally with the shaft 6 about the axis of the shaft 6.

When the rotor 8 rotates in a condition where N poles and S poles are formed on the pole core 11, a rotating magnetic field of the rotor 8 acts on the stator coil 13 such that AC electromotive force is generated in the stator coil 13. The magnitude of the AC electromotive force generated in the stator coil 13 is regulated by having the regulator 4 regulate the magnitude of the field current flowing through the field coil 10.

The AC current generated in the stator coil 13 is transmitted from the stator coil 13 to the rectifiers 5, and rectified to a DC current by the rectifiers 5. The current rectified by the rectifiers 5 is then charged to the battery 23 or supplied to the electric load 40.

Next, a method of manufacturing the regulator 4 used in the vehicle AC power generator 1 will be described. First, the regulator holder 41 having the molded member 411 and the terminal group 412 provided on the molded member 411, and the regulator main body 42 having the main body portion 421 including the IC chip and the plurality of connection terminals 422 projecting from the main body portion 421, are manufactured in advance, whereby the regulator holder 41, the regulator main body 42, and the capacitor 43 are prepared (preparation step).

Next, the regulator holder 41 is disposed such that the carrying surface 415 faces upward, whereupon the main body portion 421 of the regulator main body 42 is placed on the carrying surface 415. Fig. 12 is a sectional view showing main parts in a condition where the regulator main body 42 of Fig. 8 is placed on the carrying surface 415. As shown in Fig. 12, the main body portion 421 is placed on the carrying surface 415 such that the connection terminals 422 respectively overlap the main body terminals 412a.

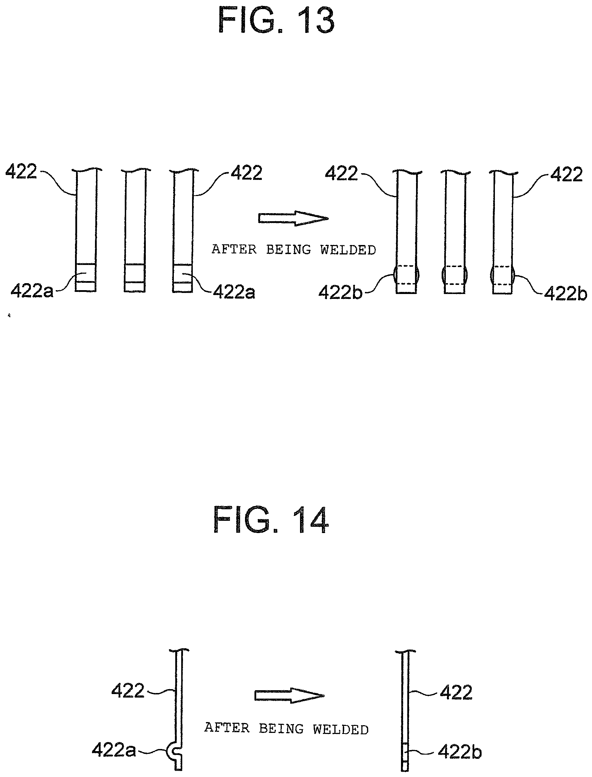

Next, the connection terminals 422 are connected individually to the main body terminals 412a by welding. Fig. 13 is a plan view comparing the connection terminals 422 of Fig. 12 before and after being welded, and Fig. 14 is a side view comparing the connection terminals 422 of Fig. 13 before and after being welded. As shown in Figs. 13 and 14, a projecting portion 422a is formed on each connection terminal 422 prior to welding. The connection terminal 422 is welded to the main body terminal 412a in the position of the projecting portion 422a.

In each connection terminal 422 following welding, the projecting portion 422a existing prior to welding collapses when melted so as to form a deformed portion 422b that bulges in a width direction of the connection terminal 422. As a result, following welding, a distance between adjacent connection terminals 422 is narrower in the position of the deformed portions 422b than in other positions (terminal connection step).

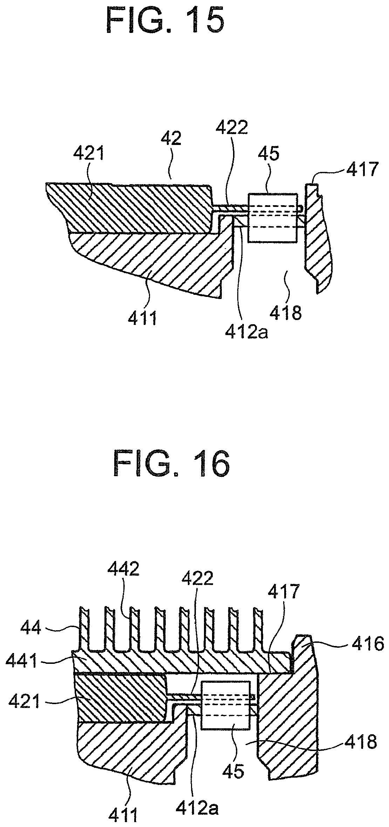

Next, the partition member 45 is attached to the connection terminals 422 and main body terminals 412a connected to each other in the terminal connection step. Fig. 15 is a sectional view showing main parts in a condition where the partition member 45 is attached to the connection terminals 422 and main body terminals 412a of Fig. 12. When the partition member 45 is attached to the connection terminals 422 and main body terminals 412a, the insert portions 452 are inserted respectively from above into the gaps between the connection portions by which the connection terminals 422 are connected to the main body terminals 412a. In so doing, short circuits are prevented from occurring between the respective connection portions due to conductive foreign matter remaining in the regulator holder 41. The conductive foreign matter may be spatter, which is molten metal that scatters during welding and adheres to the connection terminals 422 and so on, pressing residue, which is generated when manufacturing the terminal group 412, and so on, for example (partition member disposal step).

Next, the heat sink 44 is attached to the molded member 411. Fig. 16 is a sectional view showing main parts in a condition where the heat sink 44 is attached to the molded member 411 of Fig. 15. When the heat sink 44 is attached to the molded member 411, the heat radiation component 421a exposed from the front surface of the main body portion 421 is coated with the paste-form thermally conductive material, whereupon the heat sink base portion 441 is fitted into the surrounding portion 416 such that the fins 442 face outward. At this time, the heat sink 44 is disposed such that the outer peripheral portion of the heat sink base portion 441 impinges on the step portion 417. As a result, the heat sink 44 is attached to the molded member 411 such that the thermally conductive material is interposed between the heat radiation component 421a of the main body portion 421 and the heat sink base portion 441 (heat sink attachment step).

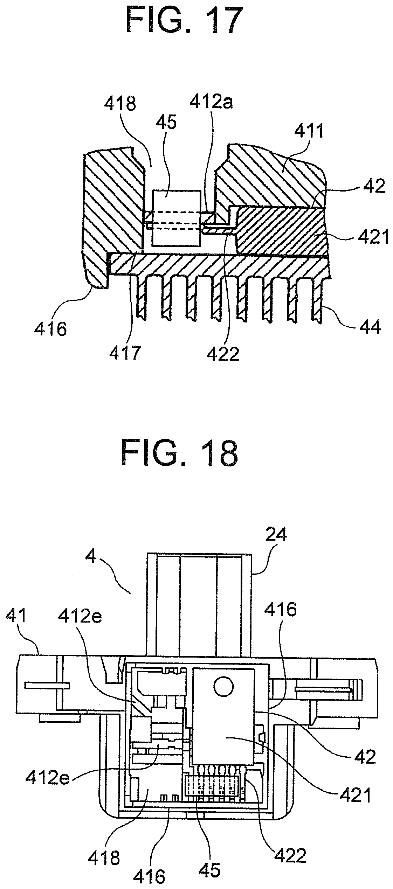

Next, the regulator holder 41 is turned upside down. Fig. 17 is a sectional view showing main parts in a condition where the regulator holder 41 of Fig. 16 is turned upside down. When the regulator holder 41 is turned upside down, the open part of the space portion 418 is positioned on an upper side of the regulator holder 41. At this time, the partition member 45 may become detached from the connection terminals 422 and the main body terminals 412a and fall due to gravity exerted on the partition member 45, but even if the partition member 45 deviates downward, the partition member 45 is received by the heat sink base portion 441, and therefore the partition member 45 is prevented from becoming detached from the connection terminals 422 and the main body terminals 412a. In this condition, the capacitor 43 is inserted into the space portion 418, and the pair of terminals of the capacitor 43 are connected individually to the capacitor terminals 412b by welding (capacitor attachment step).

Next, a fluid material having an electrical insulation property is injected into the space portion 418 through the open part of the space portion 418. In this example, epoxy resin is used as the fluid material. At this time, the space portion 418 extends to the position of the heat sink 44, and therefore the fluid material spreads to the regulator main body 42 and the heat sink 44 as well as the capacitor 43. As a result, the capacitor 43, the capacitor terminals 412b, the partition member 45, and the connection portions between the connection terminals 422 and the main body terminals 412a are embedded in the fluid material.

Next, the fluid material injected into the space portion 418 is hardened by applying heat thereto, whereby the fluid material forms the filling material 46. As a result, the regulator main body 42, the capacitor 43, and the partition member 45 are fixed to the molded member 411, and the respective attachments of the regulator main body 42, the capacitor 43, the partition member 45, and the heat sink 44 to the molded member 411 are reinforced (filling step) . Thus, the regulator 4 is manufactured.

Next, the vehicle AC power generator 1 is manufactured by attaching the brush device 3, the regulator 4, and the rectifiers 5 to the rear bracket 15 and then assembling components such as the shaft 6, the stator 7, the rotor 8, the front bracket 14, and the rear bracket 15.

In the vehicle AC power generator 1, as described above, the insert portions 452 of the partition member 45 are inserted respectively into the gaps between the connection portions by which the main body terminals 412a are connected to the connection terminals 422, and therefore, even when conductive foreign matter remains in the gaps between the connection portions by which the main body terminals 412a are connected to the connection terminals 422, the conductive foreign matter can be pushed out by the insert portions 452. Further, when the connection terminals 422 are connected individually to the main body terminals 412a by welding, the connection terminals 422 may easily deform during the welding so as to come into contact each other, but even in this case, contact between the respective connection terminals 422 can be prevented reliably by the insert portions 452. Hence, electrical short circuits can be reliably prevented from occurring between the connection portions by which the main body terminals 412a are connected to the connection terminals 422, and as a result, the reliability of the regulator 4 can be improved. Furthermore, an industrial standards package outer shape such as T0220, for example, in which the gaps between the respective connection terminals 422 are narrow, can be employed in the regulator holder 41, enabling a reduction in the cost of the regulator 4.

Moreover, the plurality of connection terminals 422 project from the main body portion 421 in the same direction, and therefore the amount of space required to dispose the regulator main body 42 can be reduced, enabling a reduction in the size of the regulator 4. Furthermore, the shape of the partition member 45 can be simplified, and therefore an increase in cost can be suppressed.

Further, the respective connection portions between the main body terminals 412a and the connection terminals 422 are embedded in the electrically insulating filling material 46 in the space portion 418 inside the molded member 411, and therefore the respective connection portions between the main body terminals 412a and the connection terminals 422 can be electrically insulated from the outside reliably. Moreover, the partition member 45 can also be fixed to the molded member 411 by the filling material 46. As a result, the reliability of the regulator 4 can be further improved while suppressing an increase in cost.

Furthermore, the filling material 46 extends from the space portion 418 to the main body portion 421 of the regulator main body 42, and therefore the regulator main body 42 can be fixed to the molded member 411 by the filling material 46 while reinforcing the attachment of the regulator main body 42 to the molded member 411. As a result, the reliability of the regulator 4 can be even further improved.

Moreover, in the method of manufacturing the regulator 4, the insert portions 452 of the partition member 45 are inserted respectively into the gaps between the connection portions by which the connection terminals 422 are connected to the main body terminals 412a after the terminal connection step in which the connection terminals 422 of the regulator main body 42 are connected individually to the main body terminals 412a of the regulator holder 41, and therefore conductive foreign matter existing between the connection portions by which the connection terminals 422 are connected to the main body terminals 412a can be pushed out by the insert portions 452. In addition, the insert portions 452 can prevent the connection terminals 422 from coming into contact with each other in a case where the connection terminals 422 deform during welding. As a result, the reliability of the regulator 4 can be even further improved.

Furthermore, after inserting the insert portions 452 of the partition member 45 respectively into the gaps between the connection portions by which the connection terminals 422 are connected to the main body terminals 412a, the respective connection portions are embedded in the fluid material in the space portion 418 inside the molded member 411, whereupon the fluid material is hardened to form the filling material 46. Hence, the respective connection portions between the main body terminals 412a and the connection terminals 422 can be electrically insulated from the outside even more reliably, and the partition member 45 can be fixed to the molded member 411 easily using the filling material 46. Moreover, even when the conductive foreign matter is moved by a filling pressure of the fluid material, the insert portions 452 inserted respectively into the gaps between the connection portions by which the connection terminals 422 are connected to the main body terminals 412a can reliably prevent electrical short circuits from occurring between the connection portions. As a result, the reliability of the regulator 4 can be even further improved while suppressing an increase in cost.

Note that in the example described above, the partition member 45 includes the plurality of insert portions 452, but when the number of connection terminals 422 is two, only one gap exists between the connection portions by which the connection terminals 422 are respectively connected to the main body terminals 412a, and therefore the number of insert portions 452 included in the partition member 45 may be set at one.

### Second Embodiment

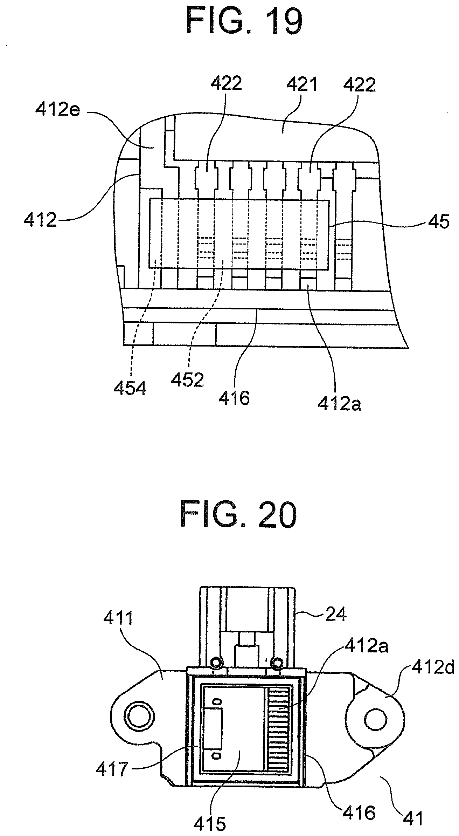

Fig. 18 is a front view showing the regulator 4 according to a second embodiment of this invention, and Fig. 19 is a main-part front view showing a part of the regulator 4 of Fig. 18 that includes the partition member 45. Note that Figs. 18 and 19 show a condition in which the heat sink 44 has been removed from the regulator holder 41. In this embodiment, when the regulator holder 41 is seen from the heat sink 44 side, a region of the space portion 418 exists in a part inside the surrounding portion 416 other than at least a region of the main body portion 421. Further, when the regulator holder 41 is seen from the heat sink 44 side, a region in which respective parts of the plurality of main body terminals 412a are exposed and a region in which respective parts of a plurality of separate terminals 412e, which are different to the main body terminals 412a, are exposed exist within the region of the space portion 418 inside the surrounding portion 416. As shown in Fig. 19, one of the parts of the plurality of separate terminals 412e that are exposed to the space portion 418 is adjacent to one of the main body terminals 412a via a gap. A separate electric component (not shown) that is different to the regulator main body 42 is placed on the plurality of separate terminals 412e in accordance with specifications of the regulator 4.

As shown in Fig. 19, the partition member 45 includes, in addition to the base portion 451 and the plurality of insert portions 452 according to the first embodiment, a plate-shaped insertion portion 454 provided separately to the insert portions 452.

The insertion portion 454 projects from the base portion 451 parallel to the insert portions 452 in the same direction as the insert portions 452. Further, a groove that is open to the opposite side to the base portion 451 is formed between the insertion portion 454 and the insert portion 452 adjacent thereto. In this example, the insertion portion 454 projects from an end portion of the base portion 451.

The partition member 45 is disposed in the space portion 418 such that the insert portions 452 are inserted individually between the connection portions by which the connection terminals 422 are connected to the main body terminals 412a, and the insertion portion 454 is inserted between the separate terminal 412e and the main body terminal 412a adjacent thereto. The space portion 418 is filled with a filling material. The respective connection portions between the connection terminals 422 and the main body terminals 412a are embedded in the filling material together with the partition member 45, the plurality of separate terminals 412e, the electrical components, and so on.

In this example, the brush holes 414 are not provided in the molded member 411, and instead, a brush holder part including the brush holes 414 is provided separately to the molded member 411 of the regulator holder 41. In this example, therefore, the brushes 21 of the brush device 3 are inserted respectively into brush holes formed in a brush holder provided separately to the regulator holder 41. All other configurations are identical to the first embodiment.

Hence, the partition member 45 includes the insertion portion 454, and the insertion portion 454 is inserted into the gap between the main body terminal 412a and the separate terminal 412e. Therefore, electrical short circuits can be prevented from occurring not only between the connection portions by which the connection terminals 422 are respectively connected to the main body terminals 412a, but also between the separate terminals 412e and the connection portions by which the connection terminals 422 are connected to the main body terminals 412a. As a result, the reliability of the regulator 4 can be even further improved, enabling a further improvement in the reliability of the vehicle AC power generator 1.

Further, when the regulator holder 41 is seen from the heat sink 44 side, the region in which respective parts of the plurality of main body terminals 412a are exposed and the region in which respective parts of the plurality of separate terminals 412e, which are different to the main body terminals 412a, are exposed exist within the region of the space portion 418 inside the surrounding portion 416, and therefore the shape of the surrounding portion 416 does not have to be aligned with the outer shape of the regulator main body 42. Hence, other electrical components can be housed inside the surrounding portion 416 in addition to the regulator main body 42, and as a result, the regulator 4 can easily be adapted to vehicle AC power generators 1 of various specifications.

Note that in the example described above, the brush holes 414 are not provided in the molded member 411, but by providing the brush holes 414 in the molded member 411, similarly to the first embodiment, a brush holder provided with the brush holes 414 can be formed integrally with the regulator holder 41.

Further, in the first embodiment, the brush holes 414 are provided in the molded member 411, but as shown in Fig. 20, instead of providing the brush holes 414 in the molded member 411, the brush holder part provided with the brush holes 414 may be omitted from the molded member 411 likewise in the first embodiment such that the brush holder is provided separately to the regulator holder 41.

Furthermore, in the embodiments described above, this invention is applied to a vehicle AC power generator having the brush device 3, but this invention may also be applied to a brushless vehicle AC power generator not having the brush device 3. In this case, the brush holder part provided with the brush holes 414 is omitted from the molded member 411, and the regulator holder 41 is configured as shown in Figs. 18 to 20.

Moreover, in the embodiments described above, the stator coil 13 is constituted by two three-phase AC windings, and the two rectifiers 5 are connected individually to the respective three-phase AC windings, but this invention is not limited thereto, and instead, for example, the stator coil 13 may be constituted by one three-phase AC winding and a single rectifier 5 may be connected to the three-phase AC winding of the stator coil 13.

Furthermore, in the embodiments described above, this invention is applied to a vehicle AC power generator serving as the rotary electric machine, but the rotary electric machine is not limited to a vehicle AC power generator, and this invention may also be applied to a normal AC power generator or motor/generator not installed in a vehicle.

### Reference Signs List

1 Vehicle AC power generator (rotary electric machine)
2 Power generator main body (rotary electric machine main body)
4 Regulator
7 Stator
8 Rotor
13 Stator coil
41 Regulator holder
42 Regulator main body
45 Partition member
46 Filling material
411 Molded member
412a Main body terminal
412e Separate terminal
415 Carrying surface
418 Space portion
421 Main body portion
422 Connection terminal
451 Base portion
452 Insert portion
454 Insertion portion

## Claims

1. A rotary electric machine comprising:
a rotary electric machine main body (2) having a stator (7) that includes a stator coil (13) and a rotor (8) that rotates relative to the stator (7); and
a regulator (4) regulating an AC voltage generated in the stator coil (13),
wherein the regulator (4) includes a regulator holder (41) , a regulator main body (42), and a partition member (45) having an electrical insulating property,
the regulator holder (41) includes a molded member (411) and a plurality of main body terminals (412a) provided on the molded member (411),
the regulator main body (42) includes a main body portion (421) that includes an IC chip and is provided on the molded member (411), and a plurality of connection terminals (422) that project from the main body portion (421) and are connected individually to the respective main body terminals (412a) by welding, and
the partition member (45) includes a plate-shaped base portion (451) and a plurality of plate-shaped insert portions (452) that project from the base portion (451) in order to form a plurality of grooves (453) that are open to an opposite side to the base portion (451) between the respective insert portions (452), the plurality of insert portions (452) being individually inserted into gaps between respective connection portions by which the main body terminals (412a) are connected to the connection terminals (422) by the welding,
the height of the insert portions (452) is higher than the height of the connection portions.

2. The rotary electric machine according to claim 1, wherein the plurality of connection terminals (422) project from the main body portion (421) in an identical direction.

3. The rotary electric machine according to claim 1 or 2, wherein
a separate terminal (412e) adjacent to any of the plurality of main body terminals (412a) is provided on the molded member (411) ,
the partition member (45) includes an insertion portion (454) provided separately to the plurality of insert portions (452), and
the insertion portion (454) is inserted into a gap between the separate terminal (412e) and the main body terminal (412a) adjacent thereto.

4. The rotary electric machine according to any one of claims 1 to 3, wherein
a space portion (418) provided in the molded member (411) is filled with a filling material (46) having an electrical insulating property, and
the respective connection portions between the main body terminals (412a) and the connection terminals (422) are embedded in the filling material (46) within the space portion (418).

5. The rotary electric machine according to claim 4, wherein a carrying surface (415) for carrying the main body portion (421) is formed on the molded member (411), and
the filling material (46) extends from the space portion (418) to the main body portion (421).

6. A regulator manufacturing method for manufacturing a regulator (4) that regulates an AC voltage generated in a stator coil (13) of a rotary electric machine,
the method comprising:
a preparation step for preparing a regulator holder (41) having a molded member (411) and a plurality of main body terminals (412a) provided on the molded member (411), and a regulator main body (42) having a main body portion (421) that includes an IC chip and a plurality of connection terminals (422) that project from the main body portion (421);
a terminal connection step for providing the regulator main body (42) on the molded member (411) and connecting the plurality of connection terminals (422) individually to the plurality of main body terminals (412a) by welding; and
a partition member disposal step, executed after the terminal connection step, for individually inserting a plurality of insert portions (452) of a partition member (45), further comprising a plate-shaped base portion (451) and having an electrical insulating property, into gaps between respective connection portions by which the connection terminals (422) are connected to the main body terminals (412a) by the welding, wherein the height of the insert portions (452) is higher than the height of the connection portions,
the plurality of insert portions (452) project from the base portion (451) in order to form a plurality of grooves (453) that are open to an opposite side to the base portion (451) between the respective insert portions (452).

7. The regulator manufacturing method according to claim 6, further comprising a filling step, executed after the partition member disposal step, for filling a space portion (418) provided in the regulator holder (41) with a fluid material having an electrical insulating property such that the respective connection portions are embedded in the fluid material, and then hardening the fluid material.

## Patentansprüche

1. Eine rotierende elektrische Maschine, umfassend:
einen Hauptkörper (2) der rotierenden elektrischen Maschine mit einem Stator (7), der eine Statorspule (13) und einen Rotor (8), der relativ zum Stator (7) rotiert, beinhaltet; und
einen Regler (4), der eine in der Statorspule (13) erzeugte Wechselspannung reguliert,
wobei der Regler (4) eine Reglerhalterung (41), einen Reglerhauptkörper (42) und ein Trennelement (45) mit einer elektrisch isolierenden Eigenschaft beinhaltet,
die Reglerhalterung (41) ein geformtes Element (411) und eine Vielzahl von auf dem geformten Element (411) bereitgestellten Hauptkörperanschlüssen (412a) beinhaltet,
der Reglerhauptkörper (42) einen Hauptkörperabschnitt (421), der einen IC-Chip beinhaltet und auf dem geformten Element (411) bereitgestellt ist, und eine Vielzahl von Verbindungsanschlüssen (422) beinhaltet, die von dem Hauptkörperabschnitt (421) herausragen und individuell mit den jeweiligen Hauptkörperanschlüssen (412a) durch Schweißen verbunden sind, und
das Trennelement (45) einen plattenförmigen Basisabschnitt (451) und eine Vielzahl von plattenförmigen Einsatzabschnitten (452) beinhaltet, die von dem Basisabschnitt (451) herausragen, um eine Vielzahl von Nuten (453) zu bilden, die zu einer dem Basisabschnitt (451) gegenüberliegenden Seite zwischen den jeweiligen Einsatzabschnitten (452) offen sind, wobei die Vielzahl von Einsatzabschnitten (452) individuell in Lücken zwischen jeweiligen Verbindungsabschnitten, durch die die Hauptkörperanschlüsse (412a) mit den Verbindungsanschlüssen (422) durch Schweißen verbunden sind, eingesetzt sind,
die Höhe der Einsatzabschnitte (452) höher als die Höhe der Verbindungsabschnitte ist.

2. Die rotierende elektrische Maschine gemäß Anspruch 1, wobei die Vielzahl von Verbindungsanschlüssen (422) von dem Hauptkörperabschnitt (421) in eine identische Richtung herausragen.

3. Die rotierende elektrische Maschine gemäß Anspruch 1 oder 2, wobei
ein separater Anschluss (412e) neben einem beliebigen der Vielzahl von Hauptkörperanschlüssen (412a) auf dem geformten Element (411) bereitgestellt ist,
das Trennelement (45) einen Einsatzabschnitt (454) beinhaltet, der separat zu der Vielzahl von Einsatzabschnitten (452) bereitgestellt ist, und
der Einsatzabschnitt (454) in eine Lücke zwischen dem separaten Anschluss (412e) und dem daran angrenzenden Hauptkörperanschluss (412a) eingesetzt ist.

4. Die rotierende elektrische Maschine gemäß einem der Ansprüche 1 bis 3, wobei
ein im geformten Element (411) bereitgestellter Raumabschnitt (418) mit einem Füllmaterial (46) mit einer elektrisch isolierenden Eigenschaft gefüllt ist, und
die jeweiligen Verbindungsabschnitte zwischen den Hauptkörperanschlüssen (412a) und den Verbindungsanschlüssen (422) in dem Füllmaterial (46) innerhalb des Raumabschnitts (418) eingebettet sind.

5. Die rotierende elektrische Maschine gemäß Anspruch 4, wobei eine Tragfläche (415) zum Tragen des Hauptkörperabschnitts (421) auf dem geformten Element (411) gebildet ist, und
sich das Füllmaterial (46) von dem Raumabschnitt (418) zum Hauptkörperabschnitt (421) erstreckt.

6. Ein Reglerherstellungsverfahren zum Herstellen eines Reglers (4), der eine in einer Statorspule (13) einer rotierenden elektrischen Maschine erzeugte Wechselspannung reguliert,
wobei das Verfahren umfasst:
einen Vorbereitungsschritt zum Vorbereiten einer Reglerhalterung (41) mit einem geformten Element (411) und einer Vielzahl von auf dem geformten Element (411) bereitgestellten Hauptkörperanschlüssen (412a), und eines Reglerhauptkörpers (42) mit einem Hauptkörperabschnitt (421), der einen IC-Chip und eine Vielzahl von Verbindungsanschlüssen (422) beinhaltet, die von dem Hauptkörperabschnitt (421) herausragen;
einen Anschlussverbindungsschritt zum Bereitstellen des Reglerhauptkörpers (42) auf dem geformten Element (411) und Verbinden der Vielzahl von Verbindungsanschlüssen (422) individuell mit der Vielzahl von Hauptkörperanschlüssen (412a) durch Schweißen; und
einen Trennelementanordnungsschritt, ausgeführt nach dem Anschlussverbindungsschritt, zum individuellen Einsetzen einer Vielzahl von Einsatzabschnitten (452) eines Trennelements (45), das zusätzlich einen plattenförmigen Basisabschnitt (451) umfasst und eine elektrisch isolierende Eigenschaft hat, in Lücken zwischen jeweiligen Verbindungsabschnitten, durch die die Verbindungsanschlüsse (422) mit den Hauptkörperanschlüssen (412a) durch Schweißen verbunden sind, wobei die Höhe der Einsatzabschnitte (452) höher als die Höhe der Verbindungsabschnitte ist,
die Vielzahl von Einsatzabschnitten (452) von dem Basisabschnitt (451) herausragen, um eine Vielzahl von Nuten (453) zu bilden, die zu einer dem Basisabschnitt (451) gegenüberliegenden Seite zwischen den jeweiligen Einsatzabschnitten (452) offen sind.

7. Das Reglerherstellungsverfahren gemäß Anspruch 6, das zusätzlich einen Füllschritt umfasst, ausgeführt nach dem Trennelementanordnungsschritt, zum Füllen eines in der Reglerhalterung (41) bereitgestellten Raumabschnitts (418) mit einem flüssigen Material, das eine elektrisch isolierende Eigenschaft hat, sodass die jeweiligen Verbindungsabschnitte in dem flüssigen Material eingebettet sind, und dann Härten des flüssigen Materials.

## Revendications

1. Machine électrique rotative comprenant :
un corps principal de machine électrique rotative (2) présentant un stator (7) qui inclut une bobine de stator (13) et un rotor (8) qui tourne par rapport au stator (7) ; et
un régulateur (4) régulant une tension de courant alternatif, CA, générée dans la bobine de stator (13),
dans laquelle le régulateur (4) inclut un support de régulateur (41), un corps principal de régulateur (42), et un élément de séparation (45) présentant une propriété d'isolation électrique,
le support de régulateur (41) inclut un élément moulé (411) et une pluralité de bornes de corps principal (412a) pourvues sur l'élément moulé (411),
le corps principal de régulateur (42) inclut une partie de corps principal (421) qui inclut une puce de circuit intégré, CI, et est pourvue sur l'élément moulé (411), et une pluralité de bornes de connexion (422) qui font saillie à partir de la partie de corps principal (421) et sont connectées individuellement aux bornes de corps principal respectives (412a) par soudage, et
l'élément de séparation (45) inclut une partie de base en forme de plaque (451) et une pluralité de parties d'insert en forme de plaque (452) qui font saillie à partir de la partie de base (451) afin de former une pluralité de rainures (453) qui sont ouvertes vers un côté opposé à la partie de base (451) entre les parties d'insert respectives (452), la pluralité de parties d'insert (452) étant insérées individuellement dans des espaces entre des parties de connexion respectives par l'intermédiaire desquelles les bornes de corps principal (412a) sont connectées aux bornes de connexion (422) par le soudage,
la hauteur des parties d'insert (452) est supérieure à la hauteur des parties de connexion.

2. Machine électrique rotative selon la revendication 1,
dans laquelle la pluralité de bornes de connexion (422) font saillie à partir de la partie de corps principal (421) dans une direction identique.

3. Machine électrique rotative selon la revendication 1 ou 2, dans laquelle
une borne séparée (412e) adjacente à l'une quelconque de la pluralité de bornes de corps principal (412a) est pourvue sur l'élément moulé (411),
l'élément de séparation (45) inclut une partie d'insertion (454) pourvue séparément à la pluralité de parties d'insert (452), et
la partie d'insertion (454) est insérée dans un espace entre la borne séparée (412e) et la borne de corps principal (412a) adjacente à celle-ci.

4. Machine électrique rotative selon l'une quelconque des revendications 1 à 3, dans laquelle
une partie d'espace (418) pourvue dans l'élément moulé (411) est remplie d'un matériau de remplissage (46) présentant une propriété d'isolation électrique, et
les parties de connexion respectives entre les bornes de corps principal (412a) et les bornes de connexion (422) sont enfouies dans le matériau de remplissage (46) à l'intérieur de la partie d'espace (418).

5. Machine électrique rotative selon la revendication 4,
dans laquelle une surface portante (415) pour porter la partie de corps principal (421) est formée sur l'élément moulé (411), et
le matériau de remplissage (46) s'étend de la partie d'espace (418) à la partie de corps principal (421).

6. Procédé de fabrication de régulateur pour fabriquer un régulateur (4) qui régule une tension CA générée dans une bobine de stator (13) d'une machine électrique rotative,
le procédé comprenant :
une étape de préparation pour préparer un support de régulateur (41) présentant un élément moulé (411) et une pluralité de bornes de corps principal (412a) pourvues sur l'élément moulé (411), et un corps principal de régulateur (42) présentant une partie de corps principal (421) qui inclut une puce CI et une pluralité de bornes de connexion (422) qui font saillie à partir de la partie de corps principal (421) ;
une étape de connexion de borne pour pourvoir le corps principal de régulateur (42) sur l'élément moulé (411) et connecter la pluralité de bornes de connexion (422) individuellement à la pluralité de bornes de corps principal (412a) par soudage ; et
une étape de disposition d'élément de séparation, exécutée après l'étape de connexion de borne, pour insérer individuellement une pluralité de parties d'insert (452) d'un élément de séparation (45), comprenant en outre une partie de base en forme de plaque (451) et présentant une propriété d'isolation électrique, dans des espaces entre des parties de connexion respectives par l'intermédiaire desquelles les bornes de connexion (422) sont connectées aux bornes de corps principal (412a) par le soudage, dans lequel la hauteur des parties d'insert (452) est supérieure à la hauteur des parties de connexion,
la pluralité de parties d'insert (452) font saillie à partir de la partie de base (451) afin de former une pluralité de rainures (453) qui sont ouvertes vers un côté opposé à la partie de base (451) entre les parties d'insert respectives (452).

7. Procédé de fabrication de régulateur selon la revendication 6, comprenant en outre une étape de remplissage, exécutée après l'étape de disposition d'élément de séparation, pour remplir une partie d'espace (418) pourvue dans le support de régulateur (41) avec un matériau fluide présentant une propriété d'isolation électrique de telle sorte que les parties de connexion respectives sont enfouies dans le matériau fluide, puis durcir le matériau fluide.
